Europäisches Patentamt

European Patent Office

Office européen des brevets

(11) Veröffentlichungsnummer : **0 155 569 B2**

(19)

# (12) NEUE EUROPÄISCHE PATENTSCHRIFT

(45) Veröffentlichungstag der neuen Patentschrift :
27.12.91 Patentblatt 91/52

(51) Int. Cl.⁵ : **H04B 3/38, H04B 1/58**

(21) Anmeldenummer : 85102299.6

(22) Anmeldetag : 01.03.85

(54) **Einrichtung zur Anpassung einer in einer Fernmeldeleitung angeordneten bidirektionalen Verstärkerschaltung an die Fernmeldeleitung.**

(30) Priorität : 17.03.84 DE 3409880

(43) Veröffentlichungstag der Anmeldung :
25.09.85 Patentblatt 85/39

(45) Bekanntmachung des Hinweises auf die
Patenterteilung :
25.01.89 Patentblatt 89/04

(45) Bekanntmachung des Hinweises auf die
Entscheidung über den Einspruch :
27.12.91 Patentblatt 91/52

(84) Benannte Vertragsstaaten :
AT BE CH DE FR GB IT LI LU NL SE

(56) Entgegenhaltungen :
DE-A- 3 046 488
DE-C- 1 151 021
GB-A- 1 115 216
US-A- 2 463 379

(56) Entgegenhaltungen :
Dr.E.Haak "Einführung in die Technik der Leitungsverstärker" 1951,Verlagsbuchhandlung E.Herzog,Seite 62-63.
U.Tietze,Ch.Schenk
"Halbleiterschaltungstechnik" 1971,Springer Verlag Berlin, Heidelberg,N.Y., S. 218-221.
Nachrichtentechnische Zeitschrift Band 19, Ap.1966. K.Buchmann, H.Werner "Ein neuer Fernsprechallverstärker mit Transistoren" S.200-204.
Prospekt "Fernmeldeübertrager der Fa.Telefunken GmbH vom Juni 1959 S.1-12.

(73) Patentinhaber : Neumann Elektronik GmbH
Bülowstrasse 104 - 110
W-4330 Mülheim 1 (DE)

(72) Erfinder : Neumann, Dirk, Dipl.-Ing.
Schemelsbruch 11
W-4330 Mülheim-Ruhr 1 (DE)

(74) Vertreter : Feder, Heinz, Dr. et al
Dominikanerstrasse 37
W-4000 Düsseldorf 11 (DE)

EP 0 155 569 B2

## Beschreibung

Einrichtung zur Anpassung einer in einer Fernmeldeleitung angeordneten bidirektionalen Verstärkerschaltung an die Fernmeldeleitung.

Die Erfindung betrifft eine Einrichtung zur Anpassung einer in einer Fernmeldeleitung angeordneten bidirektionalen Verstärkerschaltung, bei der für die beiden Sprechrichtungen getrennte, in einer Gabelverstärkerschaltung angeordnete Verstärker vorgesehen sind, an die Fernmeldeleitung.

Derartige bidirektionale Verstärkerschaltungen werden beispielsweise bei Fernsprechanlagen in sogenannten Anruf-Weiterschaltungen eingesetzt, durch welche Anrufe, die einem bestimmten Anschluß gelten, zu einem anderen unter Umständen weit entfernten Anschluß über Fernverbindungsleitungen weitergeschaltet werden.

Es ist bekannt, daß die Summe der Verstärkungen in den den beiden Sprechrichtungen zugeordneten Verstärkern einen bestimmten Wert nicht übersteigen darf, da sonst wegen der begrenzten Gabelübergangsdämpfung der beiden Gabelschaltungen Rückkopplungsschwingungen einsetzen.

Da bei Anruf-Weiterschaltungen ein sehr unterschiedliches Dämpfungsverhalten der Fernsprechleitung auftreten kann, ist es bekannt, zum Ausgleich dieses unterschiedlichen Dämpfungsverhaltens für jede Sprechrichtung einen steuerbaren Verstärker vorzusehen und das Übertragungsverhalten der beiden in der Gabelverstärkerschaltung angeordneten Verstärker durch eine Steuereinrichtung zueinander gegensinnig derart zu steuern, daß die Summe beider Verstärkungen im logarithmischen Maß den zweifachen Minimalwert der Gabelübergangsdämpfung nicht übersteigt (DE-OS-3 046 488).

Bei diesen bekannten Einrichtungen ist jedoch die erzielbare Verstärkung begrenzt, was sich bei niedrigen Signalpegeln bemerkbar macht, weil in diesem Fall zwar der jeweils in der aktiven Sprechrichtung wirksame Verstärker in seinem Verstärkungsgrad hochgesteuert werden kann, der in der passiven Sprechrichtung wirksame Verstärker aber entsprechend zurückgesteuert werden muß, damit der obengenannte Summenwert nicht überschritten wird.

Da bei den üblichen Gabalschaltungen die Gabelübergangsdämpfung nur etwa 6 bis 7 dB beträgt, ist die sinnvolle Gesamtverstärkung auf 10 bis 12 dB begrenzt, da aufgrund von Erfahrungswerten die Gesamtverstärkung um mindestens 2 dB unter dem zweifachen Wert der Gabelübergangsdämpfung bleiben soll.

Dies bedeutet, daß bei schwachen Signalpegeln bereits bei einer Verstärkung von nur 10 bis 12 dB in der aktiven Sprechrichtung die Verstärkung der passiven Sprechrichtung auf den Wert 0 zurückgesteuert werden muß.

Die Gabelübergangsdämpfung ist bestimmt durch die Anpassung der Gabelverstärkerschaltung an die Fernmeldeleitung. Diese Anpassung geschieht bekanntlich durch den Abschluß der Gabelschaltung mit einem Nachbildungsnetzwerk. Bekannte Nachbildungsnetzwerke sind aus ohmschen Widerständen und Kapazitäten aufgebaut.

Bei einer bekannten Einrichtung der oben beschriebenen Art (NTZ 1966, Heft 4, S. 200 - 204; DE-C-1 151 021) ist das Nachbildungsnetzwerk nach dem Prinzip einer sogenannten Hoyt-Nachbildung ausgebildet, bei der die Induktivität parallel zu einer Kapazität im Längszweig des Nachbildungsnetzwerks angeordnet ist, während im Querzweig eine Kapazität sowie ein ohmscher Abschlußwiderstand liegen. Dieses Nachbildungsnetzwerk muß zur Anpassung in aufwendiger Weise sehr sorgfältig abgeglichen werden und dennoch ist in vielen Fällen eine befriedigende Anpassung nicht erreichbar.

Es ist weiterhin bekannt, bei einer Leitungsnachbildung für eine unbespulte, mit Negativ-Impedanz-Verstärkern ausgerüstete Kabelleitung (DE-A-2 136 095), die eine Querinduktivität und eine Längsinduktivität aufweist, der Querinduktivität leitungsseitig einen Ortsleitungsübertrager parallel zu schalten. Aber auch bei dieser, ein sehr spezielles Problem lösenden Leitungsnachbildung wird eine Längsinduktivität und eine zusätzliche Querinduktivität verwendet, das auch hier in aufwendiger Weise abgeglichen werden muß.

Die der Erfindung zugrunde liegende Aufgabe bestand dann, eine pessere Anpassung der Gabelverstärkerschaltung an die Fernmeldeleitung zu erreichen, um die Gabelübergangsdämpfung zu erhöhen und damit eine höhere Summenverstärkung zu ermöglichen.

Die Erfindung geht von dem Grundgedanken aus, daß eine ideale Anpassung der Gabelschaltung dann erzielt wird, wenn der komplexe Nachbildungswiderstand mit dem Eingangsscheinwiderstand der angeschlossenen Fernmeldeleitung übereinstimmt (s. Bergmann: "Lehrbuch der Fernmeldetechnik", Fachverlag Scheile & Schön GmbH, Berlin, 4. Aufl. 1978, S. 304 - 306). Dies ist in der Praxis nicht zu erreichen.

Die Erfindung benutzt die Erkenntnis, daß eine bessere Anpassung der Gabelverstärkerschaltung an die Fernmeldeleitung zu erzielen ist, wenn bestimmte klar erfaßbare Eigenschaften der Fernmeldeleitung, die den Eingangsscheinwiderstand besonders stark beeinflussen, bei der Ausbildung des Nachbildungsnetzwerkes berücksichtigt werden.

Die Lösung der obengenannten Aufgabe erfolgt erfindungsgemäß mit den Merkmalen aus dem Patentanspruch.

Es hat sich herausgestellt, daß die in jeder Fernmeldeleitung vorhandenen Ortsleitungsübertrager einen starken Einfluß auf den Eingangsscheinwiderstand ausüben. Am stärksten ist der Einfluß des der Gabelschaltung am nächsten liegenden Ortsleitungsübertragers. Die Eigenschaften der anderen Übertrager und der zwischen den Übertragern vorhandenen Leitungslängen tritt dagegen zurück. Die erfindungsgemäße Ausbildung des Nachbildungsnetzwerkes kann daher so erfolgen, als liege der Ortsleitungsübertrager unmittelbar vor der Gabelschaltung.

Es hat sich gezeigt, daß auf diese Weise eine beträchtliche Steigerung der Gabelübergangsdämpfung erreicht werden kann. Das Netzbildungsnetzwerke enthält eine Schaltung, die in ihren Eigenschaften einem derartigen Ortsleitungsübertrager äquivalent ist. Die erforderliche Induktivität wird dabei durch eine Drossel erzeugt.

Im folgenden wird anhand der beigefügten Zeichnungen ein Ausführungsbeispiel für eine Einrichtung nach der Erfindung näher erläutert.

In den Zeichnungen zeigen:

Fig. 1 in einem Prinzipschaltbild eine in einer Fernmeldeleitung angeordnete bidirektionale Verstärkerschaltung;

Fig. 2 in ausführlicherer Darstellung die Schaltung nach Fig. 1 im Bereich einer Gabelschaltung;

Fig. 3 ein Beispiel für ein Nachbildungsnetzwerk zum Abschluß der Gabelschaltung nach Fig. 2;

Fig. 4 Kennlinienbilder für den Verstärkungsgrad von Verstärkern in einer Gabelverstärkerschaltung.

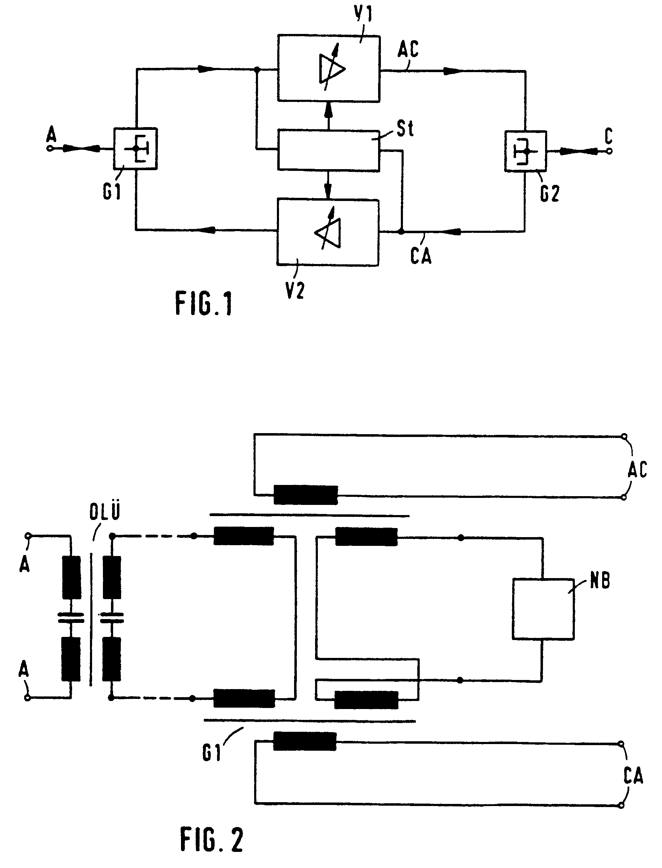

Die Einrichtung nach Fig. 1 besteht aus einer Gabelverstärkerschaltung mit den Gabelschaltungen G1 und G2 und dem von einem Teilnehmer A zu einem Teilnehmer C führenden Zweig AG und -einem vom Teilnehmer C zum Teilnehmer A führenden Zweig CA einer Fernmeldeleitung. Im Zweig AC ist ein Verstärker V1 und im Zweig CA ein Verstärker V2 vorgesehen. Jeder dieser Verstärker kann in an sich bekannter Weise mehrere Verstärkerstufen enthalten. Durch eine Steuerschaltung St wird der Verstärkungsgrad der beiden Verstärker V1 und V2 in Abhängigkeit von dem in der jeweils aktiven Sprechrichtung auf einem der Leitungszweige AC bzw. CA herrschenden Signalpegel gegensinnig gesteuert. Die Gabelschaltungen G1 und G2 können in bekannter Weise aufgebaut sein, wie dies beispielsweise in fig. 2 dergestellt ist. Zwischen dem Teilnehmer A und der Gabelschaltung G1 sei ein Ortsleitungsübertrager OLÜ in die Leitung eingeschaltet. Die Gabelschaltung G1 ist in bekannter Weise durch ein Nachbildungsnetzwerk NB abgeschlossen.

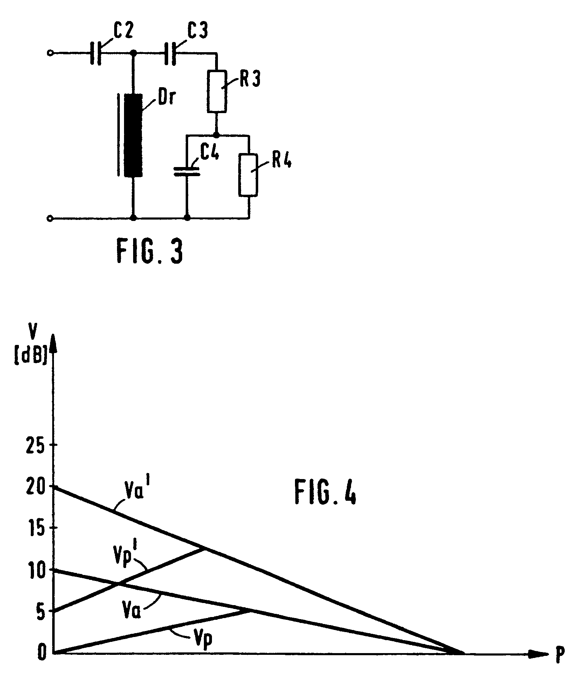

In Fig. 3 ist ist dieses Nachbildungsnetzwerk dargestellt.

Bei deisem Nachbildungsnetzwerk ist als Induktivität eine Drossel Dr verwendet, der in Serie ein Kondensator C2 vorgeschaltet ist. Parallel zur Drossel sind in Serie ein weiterer Kondensator C3 und zwei Widerstände R3 und R4 geschaltet, wobei dem Widerstand R4 ein Kondensator C4 parallelgeschaltet ist. Es hat sich als zweckmäßig erwiesen, wenn die Kondensatoren C2 und C3 eine Kapazität von 1µF und die Drossel Dr eine Induktivität von 350 mH aufweisen.

Mit demin Fig. 3 dargestellten Nachbildungsnetzwerk können Gabelübergangsdämpfungen erreicht werden, die erheblich größer sind als die mit den bisherigen Nachbildungsnetzwerken erzielbaren Gabelübergangsdämpfungen.

In Fig. 4 ist anhand von Kennlinienbildern der Verstärkungsgrade der Verstärker V1 und V2 dargestellt, was die Erhöhung der Gabelübergangsdämpfung bei der gegensinnigen Steuerung der Verstärkung für Vorteile mit sich bringt. In Fig. 4 stellt die Kurve Va die Verstärkungskennlinie bei einem der Verstärker V1 oder V2 in der jeweils aktiven Sprechnichtung der, während die Kurie Vp die Verstärkungskennlinie des entsprechenden Verstärkers in der passiven Sprechrichtung ist, und zwar bei einer Gabelübergangsdämpfung der Gabelschaltungen G1 und G2 von 6 dB wie sie in etwa mit einem Nachbildungsnetzwerk bekannter Bauart erzielbar ist. Die Kurven Va' und Vp' stellen die entsprechenden Verstärkungskennlinien bei einer Gabelübergangsdämpfung von 13,5 dB dar, wie sie beispielsweise mit einem Nachbildungsnetzwerk nach Fig. 3 erzielbar ist. In beiden Fällen wird der Verstärkungsgrad der beiden Verstärker zunächst in Abhängigkeit vom Signalpegel hochgesteuert. Bei stark abnehmendem Signalpegel setzt die gegensinnige Steuerung ein, d. h. die Kurven Va und Vp bzw. Va' und Vp' laufen auseinander.

Im falle der Kennlinien Va und Vp beträgt die maximale Summenverstärkung 10 dB. Dies bedeutet, daß bei sehr kleinem Signalpegel, wenn die Verstärkung des Verstärkers in der aktiven Sprechrichtung auf 10 dB hochgesteuert wird, der andere Verstärker in der passiven Sprechrichtung auf den Wert 0 zurückgesteuert werden muß.

Im Falle der Verstärkungskennlinien Va' und Vp' beträgt die maximale summenverstärkung 25 dB. Man erkennt aus den Kennlinien, daß in diesem Falle bei kleinen Signalpegeln, wenn beispielsweise der Verstärker in der aktiven Sprechrichtung auf einen Verstärkungsgrad von 20 dB hochgesteuert ist, der Verstärker in der passiven Sprechrichtung immer noch auf einen Verstärkungsgrad von 5 dB eingestellt sein kann.

## Patentansprüche

1. Einrichtung zur Anpassung einer in einer Fernmeldeleitung angeordneten bidirektionalen Verstärkerschaltung, bei der für die beiden Sprechrichtungen getrennte, in einer Gabelverstärkerschaltung angeordnete Verstärker (V1, V2) vorgesehen sind, an die Fernmeldeleitung, wobei jede Gabelschaltung (G1, G2) mit einem Nachbildungsnetzwerk (NB) abgeschlossen ist, das eine als Drossel (Dr) ausgebildete Querinduktivität aufweist, deren wert der Induktivität des der Gabelschaltung am nächsten liegenden Ortsleitungsübertragers (OLÜ) in der Fernmeldeleitung entspricht und in Serie zur Drossel (Dr) ein Kondensator (C2) und parallel zur Drossel in serie ein weiterer Kondensator (C3) und ein aus ohmschen Widerständen (R3, R4) und Kondensatoren (C4) aufgebautes Netzwerk geschaltet ist.

## Claims

1. Device for matching a bidirectional amplifier circuit, in which separate amplifiers (V1, V2), arranged in a hybrid amplifier circuit, are provided for the two directions of speech transmission and which is arranged in a telecommunication line, to the telecommunication line, wherein each hybrid circuit (G1, G2) is terminated with a balancing network (NB) which exhibits a shunt inductance constructed as choke (Dr), the value of which corresponds to the inductance of the local line transformer (OLÜ) which is closest to the hybrid circuit in the telecommunication line, and a capacitor (C2) is connected in series with the choke (Dr) and a further capacitor (C3) and a network of ohmic resistors (R3, R4) and capacitors (C4) in series are connected in parallel with the choke.

## Revendications

1. Dispositif d'adaptation à la ligne de télécommunication d'un circuit amplificateur bidirectionnel monté dans une ligne de télécommunication, dans lequel sont prévus des amplificateurs (V1, V2) séparés pour les deux directions conversationnelles, disposés dans un circuit amplificateur à fourche dans lequel chaque circuit à fourche (G1, G2) se termine par un circuit d'équilibrage (NB) qui contient une inductivité transversale conçue comme une self (Dr), dont la valeur correspond à l'inductivité du translateur à la ligne interurbaine le plus proche (OLU) monté dans la ligne de télécommunication, un condensateur (C2) étant monté en série avec la self (Dr) et, en parallèle avec la self, un autre condensateur (C3) et un montage constitué de résistances ohmiques R3, R4) et de condensateurs (C4) étant montés en série.

FIG.1

FIG. 2

FIG. 3

FIG. 4